# EUROPEAN PATENT SPECIFICATION

(11) **EP 0 360 015 B1**
(45) Date of publication and mention of the grant of the patent: **19.07.1995**
(21) Application number: 89115453.6
(22) Date of filing: 22.08.1989
(51) Int. Cl.: C08K 13/02, C08L 101/00

(54) **Ignition resistant modified thermoplastic composition**
Zündbeständige modifizierte thermoplastische Zusammensetzung
Composition thermoplastique modifiée résistant à l'ignition

(30) Priority: 25.08.1988 US 236706
(43) Date of publication of application: 28.03.1990
(73) Proprietor: THE DOW CHEMICAL COMPANY, Midland, Michigan 48640 (US)
(72) Inventor: Ogoe, Samuel Abotar, Angleton Texas 77515 (US); Ho, Thoi Huu, Lake Jackson Texas 77566 (US)
(74) Representative: Casalonga, Axel

(56) References cited:
- EP-A- 0 207 359
- EP-A- 0 324 392
- GB-A- 1 459 648
- US-A- 4 223 100
- US-A- 4 826 900
- R.M. Aseeva/G.E. Zaikov, "Combustion of Polymer Materials, p. 212-241 and 267-274, Hanser Publishers (1986).

## Description

This invention relates to ignition resistant thermoplastic compositions made with polycarbonates and containing polytetrafluoroethylene, metal salts of inorganic acids and organo phosphorous compounds which act to reduce the susceptibility of such compositions to ignition and/or burning or at least to minimize the dripping of molten polymer when exposed to fire conditions.

Thermoplastic polymers have found extensive commercial application because of their excellent physical properties. These thermoplastic polymers are suitable for the manufacture of molded parts wherein impact strength, rigidity, toughness, heat resistance, and excellent electrical properties are required.

However, these polymers exhibit a brief but definite burning time when contacted with an open flame.

In attempts to increase the combustion resistance of thermoplastic polymers, it has been a common practice to incorporate monomeric phosphites, phosphoric acid esters, thiophosphoric acid esters containing halogenated alkyl radicals and halogenated organic compounds into the carbonate polymer. However, in order to obtain any noticeable improvement in combustion resistance, these additives and/or combinations of the additives have been employed in such large quantities that they often adversely affect some of the desirable physical properties of the carbonate polymer such as heat stability, toughness, and ultra-violet light stability.

In US-A-3,671,487 fire retardant polyester resins comprising glass fibers, fire retardant additives such as halogen-containing compounds or phosphate compounds and fibril forming polytetrafluoroethylene (PTFE) are disclosed and claimed. The present invention represents an improvement over this patent in that the need for glass fibers and halogenated compounds has been obviated.

US-A-4,563,496 discloses the use of a combination of halogenated compound and metal oxides for ignition resistance of the blend of polycarbonate (PC) and acrylonitrile-butadiene-styrene copolymer (ABS). However, the metal oxides result in the loss of the thermal stability of PC.

US-A-4,692,488 discloses a blend of a polycarbonate, a copolymer of styrene and acrylonitrile, triphenylphosphate, and polytetrafluoroethylene. Comparison example 2 (line 53, page 8) of this patent indicates that without Na₂SO₄, the blend of PC and ABS with triphenylphosphate and polytetrafluoroethylene give only V-1 rating.

GB-A-1,459,648 discloses the use of triphenylphosphate, a non-combustible fibre material and polytetrafluoroethylene as flame retardant additives for PC, polyesters, and ABS. However, the patent shows that polytetrafluoroethylene resin does not prevent dripping without the addition of fibre.

Aromatic carbonate polymers having good flame retardant properties are shown in US-A-4,626,563 and 4,223,100. However, the present invention represents an improvement over these patents also in that the need for halogenated compounds has been eliminated. The elimination of halogenated compounds is important since the presence of these compounds adversely affects the ultra-violet light stability of the polymers.

EP-A- 207 359 discloses thermoplastic compositions having flame retardant properties consisting of:
(A) 40-95 parts by weight (pbw) of a thermoplastic non-haloaromatic polycarbonate,
(B) 60-5 pbw of a halogen-free copolymer of:
   (i) 50-100 wt% of a styrenic monomer, such as styrene and α-methylstyrene,
   (ii) 50-0 wt% acrylonitrile,
(C) 1-20 pbw, based on 100 parts (A) + (B), of a halogen-free phosphor compound such as triphenyl phosphate,
(D) 0.05-5 pbw (based on 100 parts (A) + (B)) of a polytetrafluoroethylene (PTFE).

The present invention is an ignition resistant non-haloaromatic thermoplastic polymer composition comprising
A) a carbonate polymer,
B) from 0.001 to 20 percent by weight of a high elastic memory polytetrafluoroethylene resulting in a heat shrinkage equal to or greater than 15 percent when tested by incorporation into the polycarbonate resin at a level of 0.5 weight percent, injection molding into bars having the dimensions of 130 mm x 13 mm x 1.6 mm and heating at 160°C for one hour and measuring the length of the sample before and after heating to determine the percentage heat shrinkage,
C) from 0.1 to 30 percent by weight of an organic phosphate, and
D) from 0.001 to 10 percent by weight of a metal salt of an inorganic acid,
which percentages by weight are based upon the total weight of the composition.

The fire retardant carbonate polymer compositions of the present invention are suitably employed in most applications in which opaque modified polycarbonates have been previously utilized. Applications of particular interest for the utilization of the said carbonate polymer compositions of this invention are pigmented and/or colored carbonate polymers useful as: automobile parts, e.g., air filters, fan housings, exterior components, housings for electrical motors, appliances, business and office equipment, photographic equipment, and aircraft applications.

The carbonate polymers employed in the present invention are advantageously aromatic carbonate polymers such as the trityl diol carbonates described in US-A-3,036,036; 3,036,037; 3,036,038 and 3,036,039; polycarbonates of bis(4-hydroxy-phenyl)-alkylidenes (often called bisphenol-A type diols), including their aromatically and aliphatically substituted derivatives such as disclosed in US-A-2,999,835; 3,038,365, 3,334,154, and 4,299,928; and carbonate polymers derived from other aromatic diols such as described in US-A-3,169,121.

It is understood, of course, that the carbonate polymer may be derived from (1) two or more different dihydric phenols or (2) one or more dihydric phenols and one or more hydroxy- or acid-terminated reactants such as dicarboxylic acids,or alkylene glycols in the event a carbonate copolymer or interpolymer rather than a homopolymer is desired. Also suitable for the practice of this invention are blends of any one of the above carbonate polymers. Also included in the term "carbonate polymer" are the ester/carbonate copolymers of the types described in US-A-3,169,121; 4,287,787; 4,156,069; 4,260,731 and 4,105,633. Of the aforementioned carbonate polymers, the polycarbonates of bisphenol-A and derivatives, including copolycarbonates of bisphenol-A, are preferred. Methods for preparing carbonate polymers for use in the practice of this invention are well known; for example, several suitable methods are disclosed in the aforementioned patents.

The carbonate polymers may, according to the present invention, be blended with non-carbonate thermoplastic polymers or copolymers selected from the group consisting of polyesters, acrylic polymers such as polymethylmethacrylates, polyacetal polymers and acrylonitrile butadiene styrene (ABS) copolymers.

The polyesters that can be employed in the present invention are selected from polymeric glycol terephthalate and isophthalate esters having repeating units of the general formula: 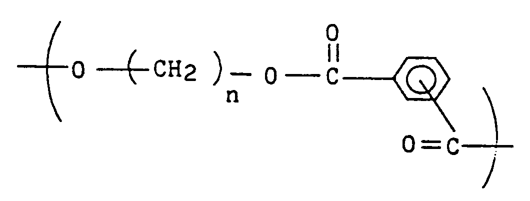
wherein n is a whole number of from 2 to 4, and mixtures of such esters. The preferred polyesters, for example, are poly(ethylene terephthalate), poly(1,4-butylene terephthalate), and copolyesters. Also included are the branched copolyesters of poly(1,4-butylene terephthalate) and poly(ethylene terephthalate). GB-A-1,459,648 and US-A-3,671,487 show the preparation of polyesters.
Suitable polytetrafluoroethylene polymers for use in this invention are those adapted to form a fibril structure to stabilize the polymer under molten conditions. Such polymers are generally disclosed by US-A-3,005,795, 3,671,487 and 4,463,130. In addition, the polytetrafluoroethylene (PTFE) polymers must have a high elastic memory and result in a heat shrinkage equal to or greater than 15 percent when tested under the following conditions. Some examples of PTFE that have high elastic memory such as Teflon™ 6C, 60, 64, 6CN, 65, and 67 are shown in Table 1.

Polycarbonate resin with 0.5 percent of PTFE was injection molded into bars having the dimensions of 5"x 1/2"x 1/16" (130 mm x 13 mm x 1.6 mm) and heated at 160°C for 1 hour. The shrinkage was measured by comparing the length of the sample before and after heating. The molded resin was also subjected to UL-94 Flammability Tests described hereinafter. A 75 ton Newbury molding machine was used. The molding conditions were:

| | |
|---|---|
| Barrel Temperature | 250°C |
| Mold Temperature | 180°C |
| Screw Speed | 150 rpm |
| Pressure | 1000 psi (7000 kPa) |

### UL-94 Flammability Tests

Substance samples are shaped to bars with the dimensions 127 x 12.7 x 1.6 mm. The bars are mounted vertically so that the underside of the test piece is 305 mm above a strip of bandage material. Each test bar is ignited individually by means of two successive ignition operations lasting 10 seconds, the burning characteristics are observed after each ignition operation and the sample is then evaluated. A Bunsen burner with a blue flame, 10 mm high, of natural gas with a heat content of 3.73 x 10⁴ kj/m³ is used for igniting the sample.

The polycarbonate molding compositions in class UL-94-V-0 contain no samples which burn for longer than 10 seconds after each action of the test flame; they show no total flaming time of more than 50 seconds when the flame acts twice on each set of samples; they contain no samples which burn completely up to the holding clamp attached to the upper end of the sample; they contain no samples which ignite the cotton-wool arranged underneath the sample by burning drips or particles; they also contain no samples which glow for longer than 30 seconds after removal of the test flame.
UL-94V-1 and V-2 are the classifications of samples which have an afterburn time of ≦ 30 seconds.
The results of several tests are shown in Table 1.

**Table 1**

| Relationship Between the Shrinkage and UL-94 class for Different Polytetrafluoroethylenes (PTFE) | | | |
|---|---|---|---|
| Run | PTFE* | Shrinkage | UL-94 at 1/16" (1.6 mm) |
| 1 | 8 | 1 | Fail |
| 2 | DXL-6000 | 1 | Fail |
| 3 | 6C | 25 | V-0 |
| 4 | 60 | 25 | V-0 |
| 7 | 64 | 15 | V-0 |
| 8 | 6CN | 24 | V-0 |
| 9 | 65 | 22 | V-0 |
| 10 | 67 | 22 | V-0 |

| | | | |
|---|---|---|---|
| * Various grades of Teflon™ from DuPont | | | |

Table 1 shows that only high elastic memory PTFE such as Teflon™ 6C, 60, 64, 6CN, 65 or 67, is effective as an ignition resistant (IR) additive. The high elastic memory PTFE helps the polycarbonate sample contract upon exposure to a flame source and thus imparts ignition resistance to the polycarbonate. The relationship between the percent shrinkage and the results of the UL-94 test is also shown in Table 1. The PTFE that gives a polycarbonate shrinkage greater than 15 percent is effective as an IR additive. The PTFE that have a low percent of shrinkage such as Teflon™ DXL-6000 and Teflon™ 8 did not impart ignition resistance to the polycarbonate.

Suitable fluorine-containing polymers are those adapted to form a fibril structure to stabilize the polymer under molten conditions. Such polymers are known to include polytetrafluoroethylene, as disclosed by U.S. Patents 3,005,795, 3,671,487 and 4,463,130.

The acrylic polymers suitable for this invention are well known and have a repeating unit according to the following formula: 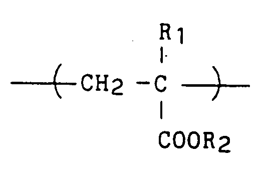
wherein
R₁ is hydrogen, alkyl, or phenyl which may be substituted
R₂ is alkyl, or phenyl which may be substituted
The polyacetal polymers suitable for this invention have a repeating unit according to the following formula: 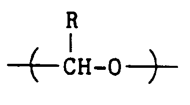
wherein
R is hydrogen or alkyl groups of 1 to 6 carbons
The ABS copolymers are well known and many suitable types are commercially available. Either an acrylonitrile-butadiene-styrene or an acrylonitrile-butadiene-alpha-methyl styrene may be used as the ABS component. Nuclear-substituted styrenes, for example p-methylstyrene, can also be used. Particularly preferred weight ratios in the ABS copolymer are 2 to 40 percent of acrylonitrile, 2 to 35 percent of butadiene, and 30 to 80 percent styrene.

The copolymer can be prepared by free radical polymerization, in particular by emulsion, suspension, solution or bulk polymerization. Useful methods for preparing these copolymers may be found in US-A-2,505,349; 2,550,139; 2,698,313; 2,713,566; 2,820,773; and 2,908,661.

Useful inorganic acid metal salts for this invention are metal bisulfates or sulfates. Examples of useful metal sulfates are sodium sulfate, potassium sulfate, lithium sulfate, rubidium sulfate, cesium sulfate, and aluminum sulfate. The corresponding metal bisulfates are also useful.

The phosphates which are suitable according to the invention have the formula below. 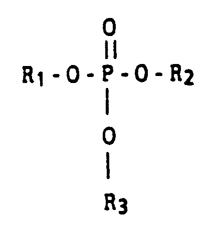
wherein
R₁, R₂ and R₃ are alkyl groups of 1 to 8 carbons, or alkyl-substituted aryl groups of 7 to 20 carbons.

Phosphates which are suitable according to the invention are, for example, triphenyl phosphate, tricresylphosphate, diphenyl 2-ethylcresyl phosphate, tri-(iso-propylphenyl)phosphate, diphenyl methyl phosphate and diethyl phenyl phosphate.

The carbonate polymer compositions of the present invention are suitably prepared by combining the ingredients in effective amounts using any of a variety of blending procedures conventionally employed for polymer blends. For example, dry pellets of the carbonate polymer, and the other additives can be dry blended and the resulting dry blend extruded into the desired shape. By "effective amount" is meant the relative amount of the respective components that is sufficient to provide the desired polymer characteristic.

The amount of the fibril-forming polytetrafluorethylene is preferably in the range of from 0.001 to 20 percent and more preferably in the range of from 0.1 to 5 percent by weight based on total composition weight.

In addition, other additives can be included in the modified carbonate polymer composition of the present invention such as fillers (i.e., glass fibers), pigments, dyes, antioxidants, heat stabilizers, ultraviolet light absorbers, mold release agents, impact modifiers and other additives commonly employed in carbonate polymer compositions.

The following examples are given to further illustrate the invention. In the following examples, all parts and percentages are by weight unless otherwise indicated.

### Example 1

Ignition resistant polyethylene terephthalate (PET), polycarbonate (PC) blend was prepared by adding 0.5 weight percent polytetrafluoroethylene (Teflon™ 6C from Du Pont), 0.3 percent sodium sulfate (Na₂SO₄) and 5 percent triphenylphosphate (TPP) to 94.2 percent of a 50 percent PET and 50 percent polycarbonate (PC) blend, the PET base resin having an inherent viscosity of 0.59. The weighed sample was dry blended on a Lightnin blender for 1 minute with constant agitation. The resultant blended material was starve fed to a 30 mm twin screw extruder at 230°C barrel temperature. The extruded pellets were dried in an oven at 100°C for 3 hours and molded into bars for flammability tests (UL-94 Flammability Tests). The results of the test are shown in Table 3.

### Control 1

The procedure for Example 1 was repeated using no additives and 50 percent PET and 50 percent PC blend. The results are shown in Table 2.

### Controls 2-6

The procedure for Example 1 was repeated using a 50 percent PET and 50 percent PC blend. The various additive compositions are described in Table 3.

### Example 2

The procedure for Example 1 was repeated using 56.5 weight percent of PC, 37.7 weight percent of PET, 5 weight percent of TPP, 0.5 weight percent of PTFE and 0.3 weight percent of Na₂SO₄.

### Control 7

The procedure for Example 1 was repeated using 60 percent PC and 40 percent PET and no additives.

### Example 3

The procedure for Example 1 was repeated using a blend of PC and polymethylmethacrylate. The composition of the blend and additives is described in Table 4.

### Control 8

The procedure for Example 1 was repeated using 75 percent PC and 25 percent polymethylmethacrylate, and no additives.

### Example 4

The procedure for Example 1 was repeated using PC and polyacetal. The composition of the blend and additives is described in Table 4.

### Control 9

The procedure for Example 1 was repeated using 75 percent PC , 25 percent polyacetal and no additives.

### Example 5

The procedure for Example 1 was repeated using PC and styrene-butadiene-acrylonitrile copolymer. The composition of the blend and additives is described in Table 4.

### Control 10

The procedure for Example 1 was repeated using 75 percent PC and 25 percent styrene-butadiene-acrylonitrile copolymer, and no additives.

### Example 6

The procedure for Example 1 was repeated using PC. The composition is described in Table 4. The extrusion and mold temperature was 250°C.

### Control 11

The procedure for Example 6 was repeated using no additives.

### Example 7

The procedure for Example 1 was repeated using aromatic polyester carbonate. The extrusion and mold temperature was 310°C.

### Control 12

The procedure for Example 7 was repeated using no additives.

**Table 2**

| Sample | UL-94 Test, at 1/16" (1.6 mm) | | |
|---|---|---|---|
| | Avg time (sec) | Number of Drips | Rating |
| Cntrl 1 50% PET/50% PC | 100 | 5/5* | HB |
| PC = polycarbonate PET = polyethylene terephthalate | | | |

| | | | |
|---|---|---|---|
| * 5 bars out of 5 dripped with flame. | | | |

**TABLE 3**

| Effects of the Additive on Ignition Resistance of PC/PET Blend | | |
|---|---|---|
| Sample | | UL-94 Test at 1/16" (1.6 mm) |
| Cntrl 2 | Cntrl 1 + 0.5% PTFE | HB |
| Cntrl 3 | Cntrl 1 + 5.0% TPP | HB |
| Cntrl 4 | Cntrl 1 + 5.0% TPP + 0.5% PTFE | HB |
| Cntrl 5 | Cntrl 1 + 0.5% Na₂SO₄ + 5.0% TPP | HB |
| Cntrl 6 | Cntrl 1 + 0.5 Na₂SO₄ + 0.5% PTFE | HB |
| Ex. 1 | Cntrl 1 + 0.5% PTFE + 0.3% Na₂SO₄ + 5.0% TPP | V-O |
| PTFE= Teflon™ 6C TPP = triphenylphosphate | | |

This table shows that the synergism of the three components, Teflon™ 6C, Na₂SO₄, and TPP renders the blend ignition resistant.

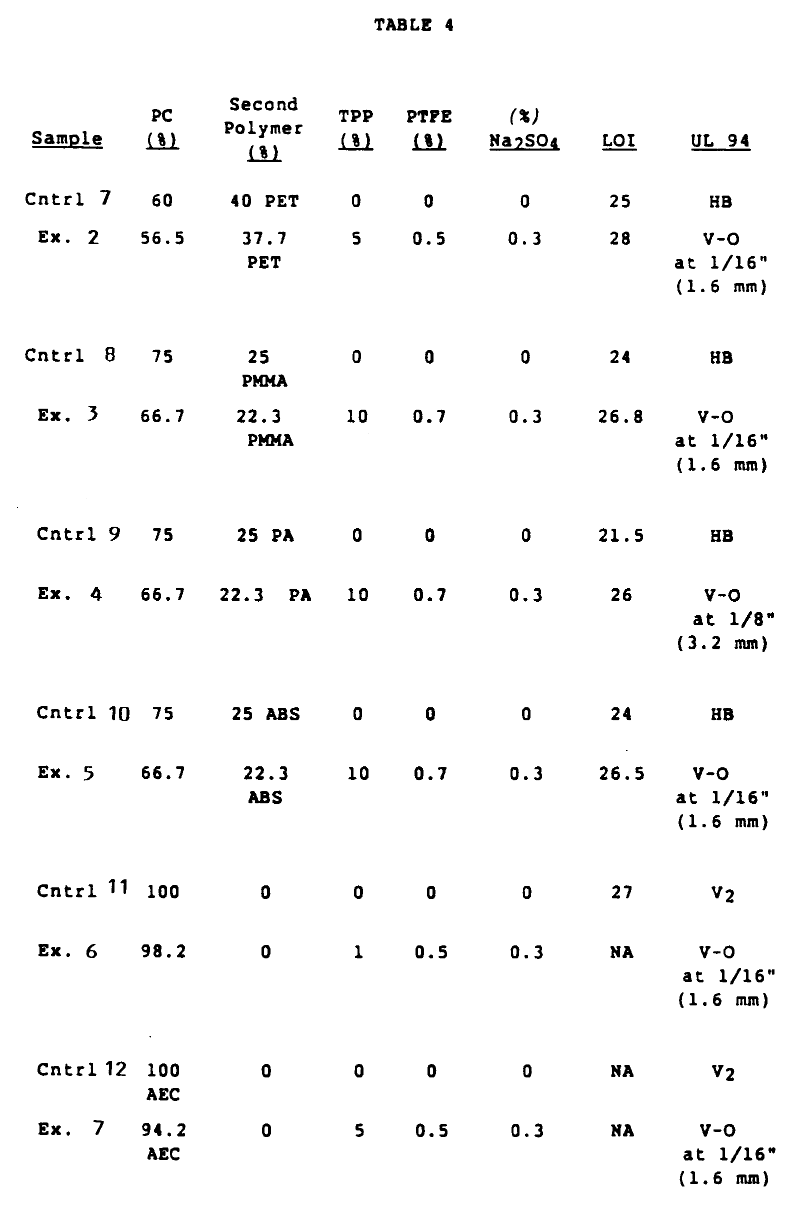

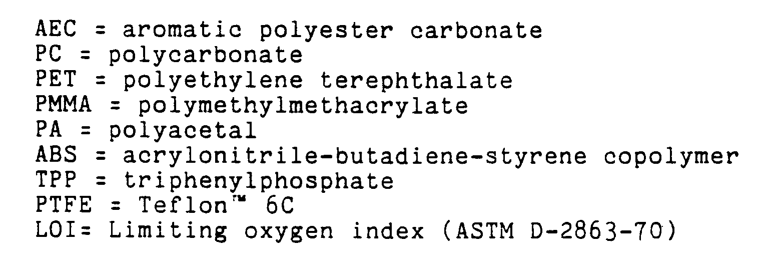

Table 4 shows that ignition resistant (IR) combination of this invention works for a wide variety of blends of polycarbonate with other thermoplastics such as polycarbonate-polyester blend, polycarbonate-ABS blend, polycarbonate-polyacetal blend, and polycarbonate-polymethylmethacrylate blend. The invention works also for aromatic polyester carbonate.

## Claims

1. An ignition resistant non-haloaromatic thermoplastic composition comprising
A) a carbonate polymer,
B) from 0.001 to 20 percent by weight of a high elastic memory polytetrafluoroethylene resulting in a beat shrinkage equal to or greater than 15 percent when tested by incorporation into the polycarbonate resin at a level of 0.5 weight percent, injection molding into bars having the dimensions of 130 mm x 13 mm x 1.6 mm and heating at 160°C for one hour and measuring the length of the sample before and after heating to determine the percentage heat shrinkage,
C) from 0.1 to 30 percent by weight of an organic phosphate, and
D) from 0.001 to 10 percent by weight of a metal salt of an inorganic acid,
which percentages by weight are based upon the total weight of the composition.

## Patentansprüche

1. Zündbeständige nicht-halogenaromatische thermoplastische Zusammensetzung, umfassend:
A) ein Carbonatpolymeres,
B) von 0,001 bis 20 Gew.-% eines Polytetrafluorethylens mit hohem Rückstellungsbestreben, ergebend eine Wärmeschrumpfung gleich oder größer als 15 % beim Testen durch Eingabe in das Polycarbonatharz mit einem Gehalt von 0,5 Gew.-%, Spritzgießen zu Stäben der Abmessungen 130 mm x 13 mm x 1,6 mm und Erhitzen auf 160° C für eine Stunde und Messen der Länge der Probe vor und nach dem Erhitzen zur Bestimmung der prozentualen Wärmeschrumpfung,
C) von 0,1 bis 30 Gew.-% eines organischen Phosphates, und
D) von 0,001 bis 10 Gew.-% eines Metallsalzes einer anorgannischen Säure,
wobei sich die Gewichtsprozentsätze auf das Gesamtgewicht der Zusammensetzung beziehen.

## Revendications

1. Composition de polymère thermoplastique non halogénoaromatique, résistant à l'ignition et comprenant :
(A) un polycarbonate,
(B) de 0,001 à 20% en poids d'un polytétrafluoroéthylène à grande mémoire élastique, qui entraîne un retrait thermique égal ou supérieur à 15%, ce retrait thermique étant déterminé, après incorporation dans la résine de polycarbonate en une proportion de 0,5% en poids, moulage par injection en des barreaux de dimensions 130 mm x 13 mm x 1,6 mm et chauffage à 160°C pendant 1 heure, par la mesure de la longueur de l'échantillon avant et après le chauffage, ce qui permet de déterminer le pourcentage de retrait thermique,
(C) de 0,1 à 30% en poids d'un phosphate organique, et
(D) de 0,001 à 10% en poids d'un sel métallique d'un acide minéral,
ces pourcentages pondéraux étant rapportés au poids total de la composition.
